# EUROPEAN PATENT APPLICATION

(11) **EP 4 599 968 A1**
(43) Date of publication of application: **13.08.2025**
(21) Application number: 24156791.6
(22) Date of filing: 09.02.2024
(51) Int. Cl.: B23D 45/16, B27B 9/00, B27G 19/04

(54) **HANDHELD CUTTING TOOL**

(71) Applicant: Hilti Aktiengesellschaft, 9494 Schaan (LI)
(72) Inventor: Blatz, Thomas, 86899 Landsberg am Lech (DE); Meuer, Roland, 86833 Ettringen (DE)
(74) Representative: Hilti Aktiengesellschaft Corporate Intellectual Property

(57) **Abstract**

Handheld cutting tool (101, 201) for driving a disc blade (109, 209), comprising a housing (110, 210), a hood (120, 220) for covering the disc blade (109, 209), wherein the hood (120, 220) is rotatably mounted on the housing (110, 210), a holding fixture for arresting rotation of the hood (120, 220) on the housing (110, 210), wherein the holding fixture comprises a toothing (125, 225) that is arranged on the hood (120, 220) and a spring-loaded pawl (132, 232) for engaging the toothing (125, 225), wherein the pawl (132, 232) is arranged on the housing (110, 210), characterized in that the holding fixture comprises a flat spring (130, 230), wherein the pawl (132, 232) is formed by the flat spring (130, 230).

## Description

The invention relates to a handheld cutting tool for driving a disc blade, according to the preamble of claim 1.

Rotating disc blades which are driven by handheld cutting tools are usually protected against being touched by means of a protective hood. Such a protective hood can also be useful for catching the particle stream that arises during cutting.

In order to adjust the rotational position of such a hood, handheld cutting tools might be provided with a holding fixture, which might provide discrete or continuous arresting of the hood. The holding fixture might include a swivel bearing comprising a latching mechanism or a friction damper. The holding fixture might be exposed to the particles produced during cutting and or the generally harsh conditions that prevail at the construction site.

A holding fixture including a latching mechanism usually comprises a plurality of unique mechanical components. An example of such a latching mechanism is disclosed in CN113000928 B.

It is an object of the invention to provide a handheld cutting tool with an arrestable rotatable protective hood that provides, at particularly low manufacturing effort, particularly satisfactory performance and/or reliability.

This object is achieved by a tool according to claim 1. Dependent claims refer to preferred embodiments of the invention.

The invention thus provides a handheld cutting tool for driving a disc blade, comprising a housing, a hood for covering the disc blade, wherein the hood is rotatably mounted on the housing, a holding fixture for arresting rotation of the hood on the housing, wherein the holding fixture comprises a toothing that is arranged on the hood and a spring-loaded pawl for engaging the toothing, wherein the pawl is arranged on the housing, characterized in that the holding fixture comprises a flat spring, wherein the pawl is formed by the flat spring.

The invention thus proposes to provide a latch-type holding fixture, and to integrate the spring functionality and the pawl functionality of the holding fixture into a monolithic flat spring. This in term allows to have a particular small number of parts, in particular moving parts, in the holding fixture, which in term can provide particularly high reliability or low maintenance effort at particularly low manufacturing effort.

In accordance with usual professional understanding, a flat spring is a spring made of a flat spring material (preferably spring steel). Preferably by one or more straight bending steps or also by free forming.

The disc blade can preferably be a diamond cutting disc. Throughout this document, and unless indicated otherwise, the terms "axially", "longitudinally", "radially", "tangentially" and "circumferentially" can refer, in particular, to the axis of rotation of the protective hood relative to the housing or/and to the axis of rotation of disc blade relative to the housing, wherein these two axes might advantageously coincide.

It is particularly preferred that the flat spring comprises a push pad for manually withdrawing the pawl from the toothing. Accordingly, the flat spring has a designated and accessible area, namely the push pad, which can be manually pushed in order to release the holding fixture so as to allow free rotation of the hood on the housing. This can further improve handling. The push pad can preferably be generally flat. In particular, the push pad can be a free end of the flat spring, which might further reduce manufacturing effort. Optionally, an additional element made of plastic material might be provided on the push pad, e.g., in order to improve ergonomics.

The flat spring might advantageously comprise a V-shaped section that forms the pawl. This can further improve performance or/and reduce manufacturing effort. In particular, the V-shaped section might include a first leg and a second leg which are, in particular, connected by a straight bend (which may define a bend line).

In a first advantageous embodiment, the flat spring comprises a L-shaped section comprising a first leg and a second leg, wherein the push pad is provided on the first leg of the L-shaped section, and wherein the second leg of the L-shaped section is the first leg of the V-shaped section. This second leg of the L-shaped section, which is the first leg of the V-shaped section, is preferably flat. This can further reduce manufacturing effort and/or improve operation. In particular, the pawl might be configured to be displaced radially or/and tangentially in this embodiment. A stop element might be provided, in particular on the housing, to provide an abutment for the flat spring in order to avoid overextension of the flat spring during operation.

In a second advantageous embodiment, the flat spring comprises a Y-shaped section, comprising a first leg, a second leg, and a third leg, wherein the pawl is provided on the first leg of the Y-shaped section, and wherein the push pad is provided on the second leg of the Y-shaped section, and wherein the flat spring is mounted on the housing on the third leg of the Y-shaped section. This can further reduce manufacturing effort and/or improve operation. In particular, the pawl might be configured to be displaced axially in this embodiment. It is particularly preferred that the first leg of the Y-shaped section forms the second leg of the V-shaped section. This can provide a particularly compact design and or low manufacturing effort.

The flat spring is arranged on the housing. Advantageously, the flat spring is mounted on the housing by means of at least one screw fastener, more preferably by means of two screw fasteners. The at least one screw fastener is preferably headed and/or extends through the flat spring. Alternatively or additionally, the flat spring might be positioned in a slit in the housing. At least one barb tab might be provided on the flat spring for locking the flat spring on the housing. It is also possible to mount the flat spring on the housing by means of riveting, caulking, gluing, soldering, and by other connecting methods.

According to another preferred embodiment of the invention, the pawl and the toothing form a ratchet mechanism, which allows the hood to be moved in one direction of rotation without the need to manually operate the pawl. Said "one direction of rotation" might in particular be a direction that advances a handle knob of the hood away from a handhold arranged on the housing, i.e., a direction of rotation that advances the hood forwards, away from the handhold or/and from the motor. In particular, said "one direction of rotation" might be a direction which brings the hood from a relatively exposed position into a relatively safe position.

It is particularly preferred that the toothing is an inclined toothing, so that the pawl and the toothing form a ratchet mechanism. This might provide a particular reliable and easy to manufacture ratchet mechanism.

The invention is explained in greater detail below with reference to preferred exemplary embodiments, which are depicted schematically in the accompanying drawings. Individual features of the exemplary embodiments presented below can be implemented either individually or in any combination within the scope of the present invention.
Figure 1 is a perspective, partly cutout view, of a first embodiment of a handheld cutting tool.
Figure 2 is a detail view of the flat spring of the handheld cutting tool of figure 1.
Figure 3 is a detail view of the hood and of the flat spring of the handheld cutting tool of figure 1.
Figure 4 is a detail view of the housing, in particular of the gear housing with bearing flange thereof, and of the flat spring of the handheld cutting tool of figure 1.
Figures 5 and 6 are detail views of the flat spring and of the hood of the handheld cutting tool of figure 1, with the hood in different rotational positions, respectively. The position of figure 5 can be an end position.
Figure 7 a perspective, partly cutout view, of a second embodiment of a handheld cutting tool.
Figure 8 is a detail view of the flat spring of the handheld cutting tool of figure 7.
Figure 9 is a detail view of the hood and of the flat spring of the handheld cutting tool of figure 7.

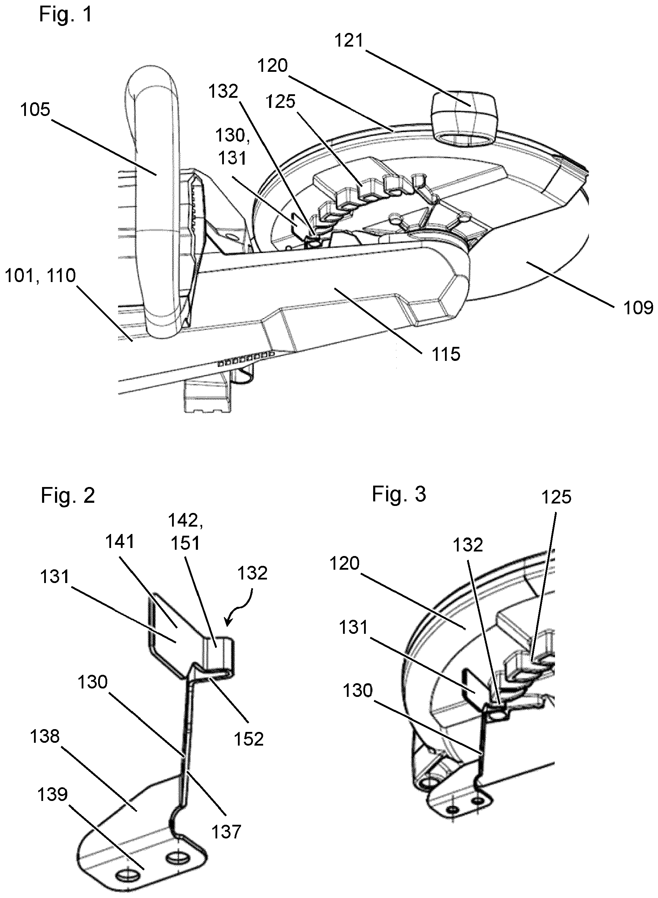

Figure 1 to 6 illustrate a first embodiment of a handheld cutting tool 101 for driving a disc blade 109. The tool 101 comprises a housing 110, which houses a not shown motor for rotationally actuating the disc blade 109, and preferably a not shown control unit for said motor. The housing 110 comprises a gear housing with bearing flange 115, on which the disc blade 109 is rotatably mounted. The tool 101 furthermore comprises an arcuate handhold 105 that is attached to the housing 110.

The tool 101 furthermore comprises a protective hood 120 for, circumferentially, covering the disc blade 109. Said hood 120 is, rotatably, mounted on the housing 110, in particular on the gear housing with bearing flange 115 thereof. A handle knob 121 is attached to the hood 120, for manually rotating the hood 120.

The tool 101 furthermore comprises a holding fixture, which is able to, releasably, arrest the above-mentioned rotation of the hood 120 with respect to the housing 110, in particular at discrete locking positions. The holding fixture comprises a toothing 125 that is arranged on the hood 120, in particular on a face of the hood 120. In the present embodiment, the toothing 125 and the hood 120 are monolithic, but this is an example only. The holding fixture furthermore comprises a spring-loaded pawl 132, arranged on the housing 110, for engaging the toothing 125, so as to arrest the above-mentioned rotation of the hood 120. The pawl 132 is spring-loaded, wherein this spring-loading forces the pawl 132 into the toothing 125 (radially with respect to the axis of rotation). A push pad 131 is connected to the pawl 132 for manually withdrawing the pawl 132 from the toothing 125 so as to release the rotational arrest of the holding fixture.

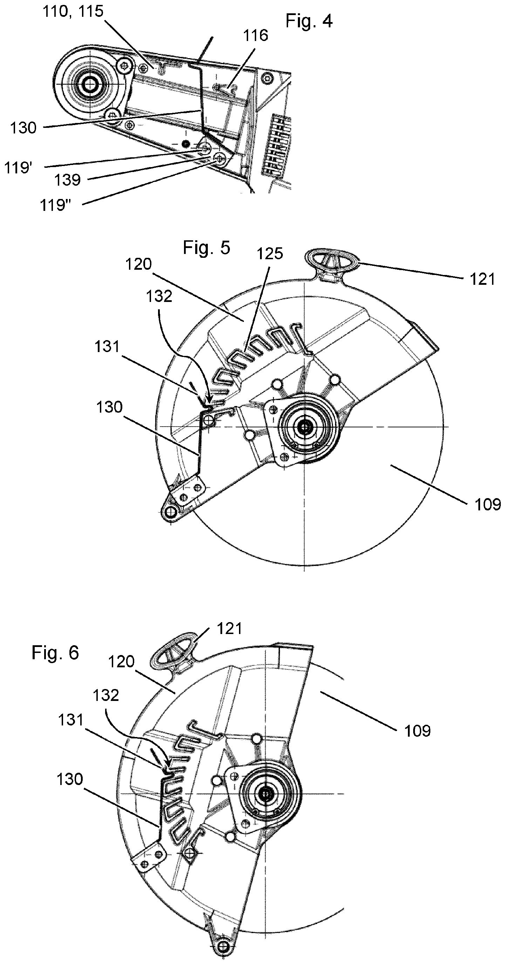

The toothing 125 is an inclined toothing, so that the pawl 132 and the toothing 125 form a ratchet mechanism, which allows rotation in a first direction, and arrests rotation in a second opposite direction. In the present embodiment, said allowed first direction would be the clockwise direction in the view of figures 5 and 6, and said arrested second direction would be the counterclockwise direction in the view of figures 5 and 6. In other words, said allowed first direction would be one that moves the handle knob 121 away from the handhold 105.

The tool 101, namely the holding fixture thereof, comprises a flat spring 130, wherein the pawl 132 is formed by the flat spring 130. More particularly, the flat spring 130 comprises a V-shaped section comprising a first leg 151 and a second leg 152, and a straight bend connecting the first leg 151 and the second leg 152 with one another. This V-shaped section of the flat spring 130 forms the pawl 132.

The flat spring 130 furthermore comprises a L-shaped section, comprising a first leg 141 and a second leg 142, and a straight bend connecting the first leg 141 and the second leg 142 with one another. The push pad 131 is provided on the first leg 141 of the L-shaped section, and the second leg 142 of the L-shaped section is the first leg 151 of the V-shaped section.

The flat spring comprises a generally flat connector tab 139, which connects the flat spring to the housing 110. In the present embodiment, the flat spring 130 is connected to the housing 110, in particular to the gear housing with bearing flange 115 thereof, by means of two screw fasteners 119" and 119", which extend through the flat spring 130, in particular through the connector tab 139 thereof.

The flat spring 130 comprises a generally flat intermediate tab 138, which is arranged adjacent to the connector tab 139, and which is connected to the connector tab 139 via a straight bend of the flat spring 130. The flat spring 130 comprises a spring leg 137, which is arranged adjacent to the intermediate tab 138, and which is connected to the intermediate tab 138 via a straight bend of the flat spring 130. The second leg 152 of the V-shaped section of flat spring 130 is arranged adjacent to the spring leg 137 and is connected to the spring leg 137 via a straight bend of the flat spring 130.

At least one of the second leg 152 of the V-shaped section, the first leg 151 of the V-shaped section, the first leg 141 of the L-shaped section, the second leg 142 of the L-shaped section, and/or push pad 131 are generally flat. In the shown embodiment, all of said elements are generally flat.

A stop 116 is arranged on the housing 110, in particular on the gear hosing with bearing flange 115. The stop 116 provides an abutment for the flat spring 130, so as to delimit the path of pawl 132 away from the toothing 125.

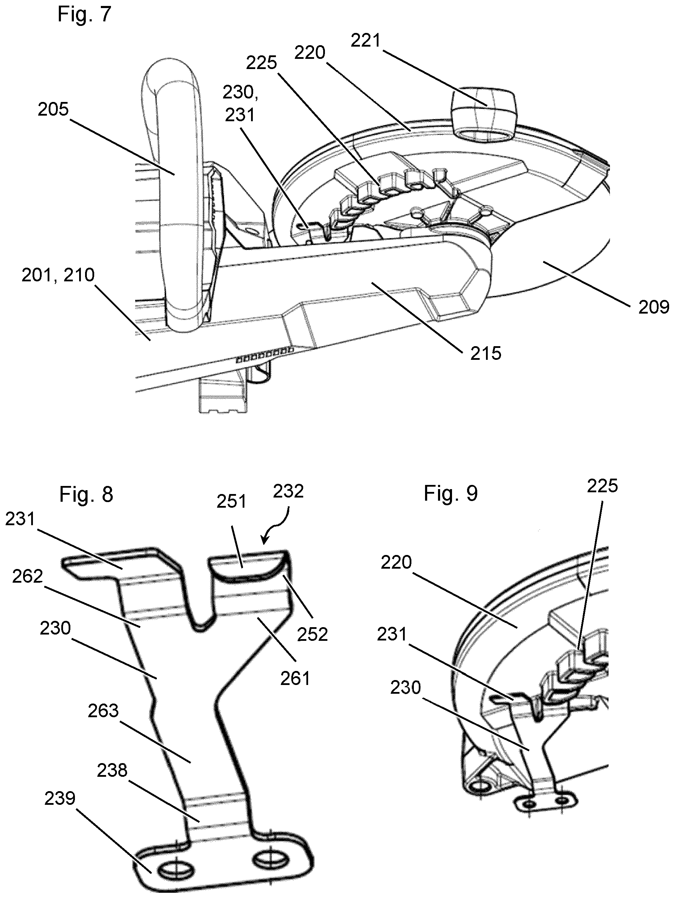

Figures 7 to 9 show second embodiment of a handheld cutting tool 201 for driving a disc blade 209. The first and the second embodiments share a common basic concept. Thus, unless indicated otherwise, the description of the first embodiment applies mutatis mutandis to the second embodiment, and vice versa, unless indicated otherwise.

The tool 201 of the second embodiment comprises a housing 210, which houses a not shown motor for rotationally actuating the disc blade 209 and preferably a not shown control unit for said motor. The housing 210 comprises a gear housing with bearing flange 215, on which the disc blade 209 is rotatably mounted. The tool 201 furthermore comprises an arcuate handhold 205 that is attached to the housing 210.

The tool 201 furthermore comprises a protective hood 220 for, circumferentially, covering the disc blade 209. Said hood 220 is, rotatably, mounted on the housing 210, in particular on the gear housing with bearing flange 215 thereof. A handle knob 221 is attached to the hood 220, for manually rotating the hood 220.

The tool 201 furthermore comprises a holding fixture, which is able to, releasably, arrest the above-mentioned rotation of the hood 220 with respect to the housing 210, in particular at discrete locking positions. The holding fixture comprises a toothing 225 that is arranged on the hood 220, in particular on a face of the hood 220. In the present embodiment, the toothing 225 and the hood 220 are monolithic, but this is an example only. The holding fixture furthermore comprises a spring-loaded pawl 232, arranged on the housing 210, for engaging the toothing 225, so as to arrest the above-mentioned rotation of the hood 220. The pawl 232 is spring-loaded, wherein this spring-loading forces the pawl 232 into the toothing 225 (axially with respect to the axis of rotation). A push pad 231 is connected to the pawl 232 for manually withdrawing the pawl 232 from the toothing 225 so as to release the rotational arrest of the holding fixture.

The toothing 225 is an inclined toothing, so that the pawl 232 and the toothing 225 form a ratchet mechanism, which allows rotation in a first direction, and arrests rotation in a second opposite direction. In the present embodiment, said allowed first direction would be the clockwise direction in the view of figures 7 and 9, and said arrested second direction would be the counterclockwise direction) in the view of figures 7 and 9. In other words, said allowed first direction would be one that moves the handle knob 221 away from the handhold 205.

The tool 201, namely the holding fixture thereof, comprises a flat spring 230, wherein the pawl 232 is formed by the flat spring 230. More particularly, the flat spring 230 comprises a V-shaped section comprising a first leg 251 and a second leg 252, and a straight bend connecting the first leg 251 and the second leg 252 with one another. This V-shaped section of the flat spring 230 forms the pawl 232.

The flat spring 230 comprises a Y-shaped section, comprising a first leg 261, a second leg 262, and a third leg 263, wherein the pawl 232 is provided on the first leg 261 of the Y-shaped section, and wherein the push pad 231 is provided on the second leg 262 of the Y-shaped section, and wherein the flat spring 230 is mounted on the housing 210 on the third leg 263 of the Y-shaped section. The first leg 261 of the Y-shaped section forms the second leg 252 of the V-shaped section.

The flat spring comprises a generally flat connector tab 239, which connects the flat spring to the housing 210. In the present embodiment, the flat spring 230 is connected to the housing 210, in particular to the gear housing with bearing flange 215 thereof, by means of two not shown screw fasteners, which extend through the flat spring 230, in particular through the connector tab 239 thereof.

The flat spring 230 comprises a generally flat intermediate tab 238, which is arranged adjacent to the connector tab 239, and which is connected to the connector tab 239 via a straight bend of the flat spring 230. The Y-shaped section is arranged adjacent to the intermediate tab 238 and is connected to the intermediate tab 238 via a straight bend of the flat spring 230.

## Claims

1. Handheld cutting tool (101; 201) for driving a disc blade (109; 209), comprising
a housing (110; 210),
a hood (120; 220) for covering the disc blade (109; 209), wherein the hood (120; 220) is rotatably mounted on the housing (110; 210),
a holding fixture for arresting rotation of the hood (120; 220) on the housing (110; 210), wherein the holding fixture comprises a toothing (125; 225) that is arranged on the hood (120; 220) and a spring-loaded pawl (132; 232) for engaging the toothing (125; 225), wherein the pawl (132; 232) is arranged on the housing (110; 210),
**characterized in that**
- the holding fixture comprises a flat spring (130; 230), wherein the pawl (132; 232) is formed by the flat spring (130; 230).

2. Tool according to claim 1,
**characterized in that**
the flat spring (130; 230) comprises a push pad (131; 231) for manually withdrawing the pawl (132; 232) from the toothing (125; 225), and
the flat spring (130; 230) comprises a V-shaped section that forms the pawl (132; 232).

3. Tool according to claim 2,
**characterized in that**
the flat spring (130) comprises a L-shaped section comprising a first leg (141) and a second leg (142),
wherein the push pad (131) is provided on the first leg (141) of the L-shaped section, and wherein the second leg (142) of the L-shaped section is a first leg (151) of the V-shaped section.

4. Tool according to claim 2,
**characterized in that**
the flat spring (230) comprises a Y-shaped section, comprising a first leg (261), a second leg (262), and a third leg (263), wherein the pawl (232) is provided on the first leg (261) of the Y-shaped section, and wherein the push pad (231) is provided on the second leg (262) of the Y-shaped section, and wherein the flat spring (230) is mounted on the housing (210) on the third leg (263) of the Y-shaped section.

5. Tool according to claim 4,
**characterized in that**
the first leg (261) of the Y-shaped section forms a second leg (252) of the V-shaped section.

6. Tool according to any of the preceding claims,
**characterized in that**
the flat spring (130; 230) is mounted on the housing (110; 210) by means of at least one screw fastener (119), or/and
the flat spring (130; 230) is positioned in a slit in the housing (110; 210).

7. Tool according to any of the preceding claims,
**characterized in that**
the toothing (125; 225) is an inclined toothing, so that the pawl (132; 232) and the toothing (125; 225) form a ratchet mechanism.
